(19) **Europäisches Patentamt / European Patent Office / Office européen des brevets**

(11) **EP 4 760 649 A1**

(12) **EUROPEAN PATENT APPLICATION**

(43) Date of publication:
17.06.2026 Bulletin 2026/25

(51) International Patent Classification (IPC):
G06V 10/50 (2022.01)     G06V 10/774 (2022.01)
G06V 10/778 (2022.01)     G06V 10/58 (2022.01)

(21) Application number: 24220088.9

(22) Date of filing: 16.12.2024

(52) Cooperative Patent Classification (CPC):
G06V 10/50; G06V 10/58; G06V 10/774;
G06V 10/778; G06V 20/52

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Stichting IMEC Nederland
6708 WH Wageningen (NL)

(72) Inventors:
• KRISHNASWAMY RANGARAJAN, Aravind
  6826 KT Arnhem (NL)
• BOOM, Bas
  3607 NM Maarssen (NL)
• OFFERMANS, Peter
  5301 NG Zaltbommel (NL)

(74) Representative: AWA Sweden AB
Matrosgatan 1
Box 5117
200 71 Malmö (SE)

(54) **A METHOD FOR PRE-PROCESSING OF IMAGES FOR MACHINE LEARNING AND A METHOD AND SYSTEM FOR IMAGE ANALYSIS**

(57)     A method for pre-processing of images (10) for machine learning, comprises: receiving (102) images (10) to be pre-processed, wherein each image (10) represents information in an array of pixels providing spatial information of the image (10), wherein each pixel is represented by a plurality of light intensities in at least four different wavelength channels providing multi-spectral information; and forming (108) a histogram representation (16, 18) of each image (10) by determining a plurality of histogram values, wherein each histogram value represents a set of wavelengths and a set of light intensities and the histogram value corresponds to a number of pixels in the array being assigned to the set of light intensities for the set of wavelengths.

Fig. 1

**Description**

Technical field

The present description relates to processing of images using machine learning. In particular, the present description relates to a method for pre-processing of images for machine learning. The present description also relates to a method and a system for image analysis.

Background

Computer vision technologies are increasingly used in various technology fields for analysis of objects. For instance, computer vision technologies are used in agricultural automation, e.g., for identifying fruit damage or plant disease diagnosis.

Computer vision technologies may often use multi-spectral or hyperspectral imaging. This implies that imaging using a plurality of wavelength channels is used, wherein the wavelength channels may include wavelength channels related to wavelengths outside the visible part of the spectrum. Multi-spectral or hyperspectral imaging may further have a high spectral resolution.

In conventional images, spectral information is provided in three channels, red, green, and blue. Such images may be referred to RGB (red, green, blue) images. Whereas machine learning methods have been developed for a long time for processing of RGB images, and optimized machine learning exist, there are multiple challenges in automation of processing of hyperspectral images.

The multi-spectral or hyperspectral images comprise a large amount of data since information is acquired in multiple wavelength channels, typically much more than the three wavelength channels of RGB images. This implies that a high dimension of data is provided to a machine-learned model such that a complicated model is required for processing data and the model may easily overfit.

Different cameras adapted for hyperspectral imaging may be configured to acquire different information. For instance, a number of wavelength channels and ranges of wavelengths represented by the channels may differ between different cameras. Also, spatial resolution may differ. This implies that data acquired by different cameras may differ and, hence, a machine-learned model may be specific to the particular type of camera used in acquiring images used for training of the model.

Further, substantial effort may be needed for providing ground-truth information for training a machine-learned model. In order to provide detailed ground-truth information, pixel-wise annotations of images may be needed. The ground-truth information may need to be manually provided in order to allow the machine-learned model to be properly trained. Pixel-wise annotation may be very time consuming. In addition, it may even be difficult for an expert to provide proper ground-truth labeling of information, e.g., related to wavelength bands outside the visible part of the spectrum since this may not be intuitively understood even by the expert.

For example, using hyperspectral images for detecting fruit damage or for providing plant disease diagnosis, indications of damage or plant disease may be present in clusters distributed across plant tissue. Thus, annotation of images for providing ground-truth information may be difficult and may be associated with errors in properly indicating healthy and unhealthy areas of plant tissue.

Thus, use of hyperspectral images in computer vision technology, e.g., for object classification may be desirable in many applications, since the hyperspectral images may comprise detailed object information. However, there is a need for improvement in the art for facilitating automated processing of hyperspectral images.

Summary

An objective of the present description is to facilitate use of machine learning for processing images comprising spectral information in at least four different wavelength channels. A particular objective of the present description is to facilitate use of machine learning for processing images, wherein the machine learning is not linked to characteristics of a camera used for acquiring images.

These and other objectives are at least partly met by the invention as defined in the independent claims. Preferred embodiments are set out in the dependent claims.

According to a first aspect, there is provided a method for pre-processing of images for machine learning, said method comprising: receiving images to be pre-processed, wherein each image represents information in an array of pixels providing spatial information of the image, wherein each pixel is represented by a plurality of light intensities in at least four different wavelength channels providing multi-spectral information; and forming a histogram representation of each image by determining a plurality of histogram values, wherein each histogram value represents a set of wavelengths and a set of light intensities and the histogram value corresponds to a number of pixels in the array being assigned to the set of light intensities for the set of wavelengths.

The method provides pre-processing of images to facilitate further processing of the images such that the images are transformed to a format that is suitable for machine learning. Thus, the method is used for forming a representation of each image that facilitates taking extensive information provided in images having multi-spectral information into account, while enabling processing of the images in a simple manner to avoid complexity in the processing of the images by a machine-learned model.

In particular, according to the method of the first aspect, a histogram representation is formed. The histogram representation provides information of numbers of pixels in the image that provide a particular combination of light intensity and wavelength range. The histogram representation may thus reduce dimensionality of the information in the image. This implies that the histogram representation is suited for machine learning, since there is no need for processing high dimensions of data and thereby a complicated model is not required.

The histogram representation may for instance be used for machine learning using available image processing models. Thus, a machine-learned model may be trained using available image processing models for processing RGB images or grayscale images since dimensionality of the histogram representation is suited for using such available image processing models. Machine learning technology on conventional images (RGB images or grayscale images) has been developed for a long time and therefore efficient machine learning methods exist for automated analysis of such images.

This implies that the method for pre-processing images enables transforming the images to a format, wherein it is possible to utilize existing machine learning methods.

It should be realized that processing of images having a high dimension of data, such as images carrying multi-spectral information, for machine learning may require a complicated model that may have a tendency to overfit. Thus, a trained machine-learned model may only be able to give accurate predictions for training data but not for new data. By avoiding use of a high dimension of data, the method may facilitate forming a machine-learned model which is able to give accurate predictions for new data.

The method may also enable forming a relatively simple machine-trained model which may thus require a relatively small amount of memory and computing resources for processing of images carrying multi-spectral information. This implies that a machine-learned model may be deployed in a device with limited computer resources (memory and computing power), such as in a portable device which is arranged close to objects to be analyzed. For instance, the method for pre-processing of images enables training a machine-learned model which may be used in a camera mounted in close vicinity to plants in an agricultural farm.

The method provides forming a histogram representation which may be agnostic to a device used for acquiring images. For instance, cameras used for multi-spectral or hyperspectral imaging may typically have different numbers of wavelength channels or different wavelength ranges of the channels. The histogram representation may be formed from images regardless of characteristics of the camera used for acquiring the images. This implies that the method may allow a machine-learned model to be formed which does not require a particular type of camera to be used for acquiring images for input to the machine-learned model.

The method enables pre-processing of images that represent spatial and multi-spectral information. Thus, an image represents information in an array of pixels, wherein each pixel includes multi-spectral information. The array of pixels may be a one-dimensional array but is typically a two-dimensional array, wherein pixels are arranged in rows and columns. Each pixel represents a spatial position and further includes at least four different wavelength channels. Thus, the four different wavelength channels are associated with a common spatial position.

However, it should be realized that the light intensity of each wavelength channel may be acquired using a separate light-sensitive area in a camera array. The light-sensitive areas may be sensitive to different wavelengths for providing the wavelength channels of the image and may be arranged in a mosaic configuration in the camera array, such that one pixel in the image may be defined by a plurality of sub-pixels of separate light-sensitive areas for detecting different wavelength information. Thus, although the sub-pixels may be formed in separate, neighboring locations in the camera array, the information acquired by sub-pixels may be grouped into a pixel that provides multi-spectral information for a single spatial location.

It should also be realized that the light intensities of the at least four different wavelength channels may be acquired in various other ways, as would be realized by the person skilled in the art. The method is not limited to any particular manner of acquiring the image. For instance, a row of light-sensitive areas being sensitive to different wavelengths or being configured to receive different wavelengths may be moved in relation to an object for forming a full image having an array of pixels including multi-spectral information.

Each pixel is represented by a plurality of light intensities in a plurality of wavelength channels. In other words, each pixel is represented by one light intensity per wavelength channel.

It should further be realized that the image may be represented by a data set which may be organized in any manner as long as a processing unit is aware of how the data set is to be interpreted. Thus, the data set may not necessarily be provided in a matrix or cube but may rather be represented as a single sequence of numbers. Nevertheless, the images may be represented as information providing spatial and spectral information and may, in some embodiments, be referred to as hyperspectral images, hyperspectral cubes or three-dimensional tensors.

The images to be pre-processed represent information in at least four different wavelength channels. This implies that the information is provided in at least four different wavelength bands. Each wavelength channel represents information in a unique wavelength band that may be separate from wavelength bands of other wavelength channels or may be partially overlapping. It should be realized that sensitivity profiles of different sub-pixels may (slightly) overlap such that different wavelength channels may partially overlap.

The wavelength channels may relate to discrete wavelength channels that are distributed over a broad overall range of wavelengths. However, the wavelength channels may provide a large number of narrow spectral bands providing spectral information in a contiguous overall range of wavelengths. This may be referred to as hyperspectral imaging and the multi-spectral information may thus relate to information from hyperspectral imaging.

It should further be realized that the wavelength channels may not necessarily be arranged in wavelength bands in a visible part of the electromagnetic spectrum. Thus, the wavelength channels may relate spectral information in ultraviolet range, visible range, and/or infrared range of the electromagnetic spectrum. Further, it should be realized that light intensity should be understood as an intensity of the electromagnetic radiation in the wavelength band associated with the wavelength channel. Hence, light intensity is not limited to intensity of visible light but may rather relate to intensity of ultraviolet light or infrared light, depending on the wavelength band associated with the wavelength channel.

The method relates to pre-processing of images for machine learning. Thus, the method allows providing an adaptation of images to be used in machine learning. Machine learning relates to any method in which training data is provided to enable a machine to learn how to process data. The machine learning allows forming a machine-learned model such that a desired output may be achieved based on new data being processed by the machine-learned model. This allows automation of processing of data.

Machine learning may involve supervised learning, wherein a machine-learned model is formed based on training data and ground-truth information associated with the training data. This allows forming of a machine-learned model based on ground-truth information on a desired outcome of the machine-learned model. Machine learning may involve unsupervised learning, wherein a machine-learned model is formed based on finding patterns in training data. Machine learning may involve semi-supervised learning, wherein only part of training data is associated with ground-truth information.

The machine learning may output a machine-learned model for processing of data. The machine-learned model may be a neural network, wherein data is processed in connected units for processing data in one or more layers. The use of multiple layers in the neural network of the machine-learned model may be referred to as deep learning.

It should be realized that the method according to the first aspect provides pre-processing of images that facilitate machine learning, and the pre-processing of images is not limited to a particular form of machine learning to be performed on the images.

The histogram representation may be provided in any suitable manner. The histogram representation may for instance be provided as a two-dimensional array of values, wherein each index in the array represents a set of wavelengths and a set of light intensities. However, the histogram representation may alternatively be provided as a sequence of values, wherein each value has a known interpretation of set of wavelengths and set of light intensities.

It should further be realized that the set of wavelengths may relate to a single wavelength band represented by a single wavelength channel. Alternatively, the set of wavelengths may relate to a broader range of wavelengths corresponding to multiple wavelength bands represented by multiple wavelength channels. It should further be realized that the set of wavelengths may be defined as a wavelength range which is not necessarily aligned to the wavelength bands of the wavelength channels. For instance, the set of wavelengths may be based on wavelength channels provided by a first type of camera, whereas an image to be pre-processed may be acquired with a second type of camera having a different setting of wavelength channels. In such case, the forming of the histogram representation may involve assigning information in a wavelength channel to the sets of wavelengths in the histogram representation. For instance, the assigning of information may involve splitting information in a wavelength channel onto two different sets of wavelengths.

It should further be realized that the set of light intensities may relate to a single value of a light intensity. Thus, each possible light intensity value in the image information may be assigned to a unique set of light intensities. It should be realized that the light intensity values may be provided as a digital representation, such that image information provides discrete light intensity values. The set of light intensities may alternatively correspond to a range of light intensity values in the image information.

It should further be realized that a size of the range of wavelengths represented by each set of wavelengths may be equally large for all sets in the histogram representation. However, in some embodiments, the sets may correspond to different sizes of ranges of wavelengths. This may for instance enable presenting information of high interest in higher resolution (small range of wavelengths per set) compared to information of low interest.

Similarly, a size of the range of light intensities represented by each set of light intensities may be equally large for all sets in the histogram representation. However, in some embodiments, the sets may correspond to different sizes of ranges of light intensities. This may for instance enable presenting information of high interest in higher resolution (small range of light intensities per set) compared to information of low interest.

According to an embodiment, the method further comprises combining the histogram representation of each image with ground-truth information of a characteristic in the image.

This implies that the pre-processed images may be provided with ground-truth information for facilitating supervised or semi-supervised machine learning.

The ground-truth information may relate to an overall characteristic in the image. Thus, the ground-truth information need not be linked to a particular spatial location in the image. This implies that the providing of ground-truth information may be relatively simple, since there may not be a need to annotate an image on pixel level.

The ground-truth information may relate to a condition or status of an object that is present in the image. Thus, the ground-truth information may provide information of a characteristic of an object in the image, wherein the characteristic represents a condition or status of the object. The ground-truth information need not be linked to a particular spatial location of visible features in the image that represent the condition or status.

According to an embodiment, a number of sets of wavelengths in the histogram representation is at least 4, such as at least 10, such as at least 20, such as at least 50.

The number of the sets of wavelengths to be used in the histogram representation may depend on the information to be extracted from the images. Thus, if the images are to be used for automated classification of objects, wherein information for enabling classifying the object is linked to a few wavelength bands, the number of sets of wavelengths may be low. However, it should be realized that using a large number of sets of wavelengths may allow maintaining fine granularity of information that is present in the received images.

The histogram representation may use a number of sets of wavelengths that is related to the number of wavelength channels available in the received images. Thus, if a first subset of the received images has a first number of wavelength channels and a second subset of the received images have a second number of wavelength channels, smaller than the first number, the histogram representation may be formed using a set of wavelengths corresponding to the second number of wavelength channels. This may facilitate forming an accurate histogram representation for both subsets of received images and using the same type of histogram representation (i.e., same set of wavelengths) for all images.

Hyperspectral images may typically include at least 30 wavelength channels and often includes more than 100 wavelength channels. Thus, for pre-processing of hyperspectral images, the number of sets of wavelengths in the histogram representation may be at least 50, which may allow maintaining fine granularity of the information in the images when forming the histogram representation.

According to an embodiment, a number of sets of light intensities in the histogram representation is at least 16, such as at least 32, such as at least 64, such as at least 128.

The number of the sets of light intensities to be used in the histogram representation may depend on the information to be extracted from the images.

The received images may comprise a range of light intensity values that depend on a resolution (e.g., number of bits) used for representing the light intensity values. Using a large number of sets of light intensities in the histogram representation may allow maintaining fine granularity of information that is present in the received images. However, each set of light intensities may typically correspond to a range of light intensity values in the received images, while still allowing necessary information in the images to be maintained.

According to an embodiment, a number of sets of wavelengths and a number of sets of light intensities is identical for each histogram representation.

This implies that the histogram representations may represent image information in the same manner for all of the received images. Thus, the pre-processing of images allows image information to be converted to a histogram representation that is standardized for the machine learning.

This implies that, regardless of a type of camera used for acquiring the images, the histogram representations may represent the image information in the same manner. For instance, the images may be received from several different types of cameras and may still be used in a simple manner for training the same machine-learned model.

It should be realized that for training of different machine-learned models, different settings of the histogram representation may be used. However, all of the images to be used for training a single machine-learned model may be formed into a common type of histogram representation, with identical numbers of sets of wavelengths and identical numbers of sets of light intensities.

According to an embodiment, the forming of a histogram representation comprises using extrapolation and/or interpolation for determining the plurality of histogram values for each image with identical numbers of sets of wavelengths and numbers of sets of light intensities.

It should be realized that at least some of the received images may not comprise wavelength channels or light intensity ranges corresponding to the sets of wavelengths and/or the sets of light intensities of the histogram representation to be formed.

The forming of the histogram representation may thus include extrapolation and/or interpolation for determining some of the histogram values. This may be particularly useful for allowing forming histogram representations in a standardized format for images that include different wavelength channels and/or ranges of light intensity values.

It should also be realized that the received images may comprise non-overlapping information. For instance, a first subset of images may include wavelength channels that extend beyond a range of wavelengths represented in a second subset of images (e.g., the first subset of images may include wavelengths in a shortwave infrared (SWIR) range whereas the second subset of images do not include wavelength channels representing wavelengths longer than near infrared (NIR) range). In such case, the information in the non-overlapping wavelength channels, i.e., the information in the SWIR wavelength channels of the first subset of images, may be omitted in forming of the histogram representation.

According to another embodiment, the histogram representation of an image acquired by a first camera may be used for dynamically searching for camera parameters of a second camera for acquiring a comparable image using the second camera.

For instance, a correct shutter time or other camera parameters may be dynamically searched. This implies that two cameras for acquiring hyperspectral images may be set for acquiring comparable images. This may be used for setting parameters of the second camera for acquiring high quality images based on the histogram representation of image(s) acquired by a first camera that provides good images.

For the second camera, the parameter space of the camera may be searched, e.g., varying shutter time, and during this search histogram representations of images acquired by the first and the second camera may be matched until a comparable histogram is achieved.

Using comparison of histogram representation is much faster compared to full image comparison, while similar results may be achieved.

According to an embodiment, the forming of the histogram representation comprises forming a two-dimensional representation of intensity and wavelength information.

The histogram representation may be formed into a two-dimensional representation. For instance, each row in the two-dimensional representation may represent a set of light intensities and each column in the two-dimensional representation may represent a set of wavelengths, or vice versa. Each element in the two-dimensional representation may have a value corresponding to the histogram value for the set of light intensities and the set of wavelengths of the row, column position of the element.

This implies that the plurality of histogram values may be ordered into a two-dimensional representation corresponding to representation of a grayscale image. The two-dimensional representation may, at least in some embodiments, be referred to as a two-dimensional histogram image.

Hence, the images may be pre-processed to form a representation which is adapted to utilize existing machine learning algorithms for image processing. Thus, according to an embodiment, forming of the two-dimensional representation of histogram values may provide histogram representation that is adapted for machine learning based on one or more of: image classification, image pattern recognition, regression, and labeling.

Machine learning algorithms for image classification, image pattern recognition, regression, and labeling exist. Thus, thanks to forming of the histogram representation that facilitates use of machine learning algorithms for image processing, the histogram representation may be provided as input for training of a machine-learned model making use of existing machine learning algorithms.

According to an embodiment, the method further comprises using a binary mask for selecting a subset of pixels in the array representing a region of interest in the array, wherein the histogram values are based on analysis of the subset of pixels for determining the number of pixels in the array being assigned to the set of light intensities for the set of wavelengths.

This implies that a region of interest in each of the received images may be defined. Thus, the forming of the histogram representation of an image may be based only on the region of interest and not on other parts of the image. This may be utilized for removing parts of the image forming background from being considered in the histogram representation.

The binary mask may define an area in the image. However, it should be realized that the binary mask may be used for selecting a subset of pixels that are spread apart in the array and do not necessarily form a single, coherent area.

The binary mask may be used for representing an object in the image. Thus, the histogram representation may provide a representation of information of the object in the image for facilitating forming a machine-learned model for analysis of objects being imaged with a high spectral resolution.

According to an embodiment, using the binary mask is based on detection of an object in the image.

Each received image may initially be processed for detecting an object in the image. This may be performed using existing image processing algorithms, e.g., image processing based on a machine-learned model, for detecting the object. Thus, detecting of the object may be automated.

However, it should be realized that the object may be detected by a person that may provide input for identifying a border of the object in the image.

A binary mask may be defined based on input of a detected object in the image. Once the binary mask is defined, the binary mask may be used for selecting the subset of pixels in the array to be used for forming the histogram representation.

According to an embodiment, the ground-truth information comprises a single representation of the characteristic for an entire image.

This implies that the ground-truth information need not be provided by assigning annotation information to any specific location in the image. This facilitates providing accurate ground-truth information as there may not be a need for determining which locations in the image are representative of the characteristic.

It should be realized that the ground-truth information may comprise a plurality of characteristics for an image. The ground-truth information may be provided by a single representation for each characteristic. Thus, the ground-truth information may provide information of a plurality of characteristics of an object in the image, wherein each characteristic is represented by a single piece of information. For instance, the ground-truth information may define a plurality of characteristics of a plant in the image, such as providing a characteristic for each of a plurality of different diseases (e.g., different viruses) that may affect the plant. Each characteristic may thus define whether the plant is affected by respective disease or not.

As used herein, the term plant refers to a living organism, and not to a factory.

According to an embodiment, each image represents a plant and the ground-truth information represents a condition of the plant.

The method may be particularly useful for pre-processing images of plants to facilitate training of a machine-learned model for analysis of plants in images. It may be very difficult to correctly annotate an image to define locations in the image representative of a disease. However, using the histogram representation, training of a machine-learned model is facilitated wherein the machine learning allows taking information with a high spectral resolution into account for learning how to identify characteristics of the plant. The ground-truth information may then only need to be provided on image-level.

The ground-truth information may represent a condition of the plant such that the method may facilitate providing information to machine learning for training a machine-learned model to identify the condition of the plant in images.

The condition of the plant may be whether the plant is healthy or unhealthy, or whether the plant is affected by a particular disease.

It should be realized that the method need not necessarily be used with images representing plants. Rather, according to an embodiment, each image may represent an object and the ground-truth information may represent an attribute of the object. The attribute of the object may be for instance be a status or condition of the object.

Thus, the method may be used for pre-processing images of objects for facilitating training a machine-learned model to determine an attribute of the object.

This may be utilized in fields of use that are not related to analysis of plants. For instance, the images may represent a skin of a person, or an interior of an eye (a retina), and the method may be used for pre-processing images to facilitate training of a machine-learned model for identifying conditions of a skin or an eye.

According to a second aspect, there is provided a method for analysis of an image, said method comprising: receiving the image, wherein the image represents information in an array of pixels providing spatial information of the image, wherein each pixel is represented by a plurality of light intensities in at least four different wavelength channels providing multi-spectral information; forming a histogram representation of the image by determining a plurality of histogram values, wherein each histogram value represents a set of wavelengths and a set of light intensities and the histogram value corresponds to a number of pixels in the array being assigned to the set of light intensities for the set of wavelengths; outputting the histogram representation to a neural network representing a relation between histogram representations of images and a characteristic in the images; and receiving information of an image characteristic of the image from the neural network.

Effects and features of this second aspect are largely analogous to those described above in connection with the first aspect. Embodiments mentioned in relation to the first aspect are largely compatible with the second aspect.

Thanks to the use of the histogram representation, dimensionality of the information in the image is reduced, allowing the image to be analyzed by a relatively simple machine-learned model, while using images having a high spectral resolution. By avoiding use of a high dimension of data, the method may facilitate using a machine-learned model that is able to give accurate predictions for new data.

The method may include processing of the histogram representation in the neural network to determine the image characteristic. However, the method may alternatively only include forming the histogram representation which may be output to an external unit which provides processing of the histogram representation using the neural network.

The histogram representation may form input of the neural network and the image characteristic may form output of the neural network.

It should be realized that the neural network may be trained to output an image characteristic based on ground-truth information of the image characteristic being provided during training of the neural network.

It should be realized that the image characteristic may be a single representation for the entire image. It should further be realized that the image characteristic may comprise a plurality of different image characteristics, wherein each image characteristic may correspond to a single representation of the characteristic for the entire image.

According to an embodiment, the method further comprises: storing spatial information providing a relation between spatial positions of pixels and parts of the histogram representation; determining parts of the histogram representation causing a determination of the image characteristic by the neural network; and determining, based on the spatial information, a region in the image causing the determination of the image characteristic.

As mentioned above, it may be very difficult to determine the image characteristic directly from an image having multi-spectral information. Therefore, the histogram representation may be needed for allowing the image characteristic to be robustly determined. However, once the image characteristic has been determined, the method may determine a region in the image that holds information for arriving at the determination of the image characteristic. Thus, the method allows going back to an original image representation for identifying a relevant region or relevant regions in the image that represent the image characteristic.

For instance, image information allowing the image characteristic to be robustly determined may reside in a wavelength band outside the visible range. This may imply that it is difficult to manually identify the region that is representative of the image characteristic. However, such relation may be identified through training of the machine-learned model and, thanks to determining relevant spatial positions from the relation between spatial information and the histogram representation, the region(s) in the image may be identified.

The determining of parts of the histogram representation causing a determination of the image characteristic by the neural network may be provided by a weighted mask that may be formed by a separate explainable neural network for providing an explainable image. Thus, the separate explainable neural network may be trained to explain how an image of the histogram representation leads to a determination of the image characteristic.

The weighted mask may provide information of which parts of the histogram representation that are relevant for causing determination of the image characteristic. Thus, by applying the weighted mask to the histogram representation, part(s) in the histogram representation may be determined.

Using the relation between the parts of the histogram representation and the spatial positions of pixels, the determined part(s) of the histogram representation may be converted to information of region(s) in the image. The determination of the region(s) in the image may involve look-up of spatial positions of pixels in a look-up table storing the spatial information.

The separate neural network for explaining how an image of the histogram representation leads to a determination of the image characteristic may be based on a gradient class activation map (Grad-CAM).

According to a third aspect, there is provided a computer program product, comprising computer-readable instructions which when executed by a processing unit cause the processing unit to perform the method according to any one of the first or second aspects.

Effects and features of this third aspect are largely analogous to those described above in connection with the first and second aspects. Embodiments mentioned in relation to the first and second aspects are largely compatible with the third aspect.

The computer program product may thus provide computer-readable instructions for allowing a method to be implemented for pre-processing of images for machine learning and/or for analysis of images. This allows the functionality of determining image characteristics of an image in a robust and efficient manner to be provided to any processing unit.

The computer program product may comprise a non-transient computer-readable medium for carrying the computer-readable instructions. Alternatively, in other embodiments, the computer program product may comprise a signal carrying the computer-readable instructions, e.g., for communicating the computer program product to the processing unit through wired or wireless communication.

According to a fourth aspect, there is provided a system for image analysis, said system comprising: a sensor device configured to acquire spatial information and spectral information in at least four different wavelength channels for forming an image; and a processing unit connected to the sensor device and configured to perform the method according to the second aspect, wherein the received image is the image acquired by the sensor device.

Effects and features of this fourth aspect are largely analogous to those described above in connection with the first, second, and third aspects. Embodiments mentioned in relation to the first, second, and third aspects are largely compatible with the fourth aspect.

Thanks to the processing unit being configured to form the histogram representation, dimensionality of the information in the image is reduced, allowing the image to be analyzed by a relatively simple machine-learned model, while using images having a high spectral resolution. By avoiding use of a high dimension of data, the system may facilitate using a machine-learned model that is able to give accurate predictions for new data.

The machine-learned model may be relatively simple, allowing the machine-learned model to be deployed in a processing unit, which may be formed in a sensor device that is remotely arranged for monitoring objects of interest. Thus, the processing unit may have limited resources (memory and computing resources) but may still be able to process images using a machine-learned model. The processing unit may therefore not only perform pre-processing to determine a histogram representation but may also process the histogram representation using the neural network for determining the image characteristic.

It should be realized that the sensor device for acquiring spatial information and spectral information may be implemented by a camera, having a plurality of wavelength bands for acquiring multi-spectral information. However, it should be realized that the sensor device need not necessarily be implemented by a camera. Rather, the image comprising spatial information and spectral information may be acquired by a plurality of detectors and sweeping of information over the plurality of detectors. For instance, the plurality of detectors may be configured to detect different wavelength bands, and a spatial relation between a scene and the plurality of detectors may be swept for allowing the image to be formed. Alternatively, the plurality of detectors may be configured to detect spatial information, and a spectral information being provided to the plurality of detectors may be swept for allowing the multi-spectral image to be formed. As yet another alternative, a tunable light source may be used for sequentially detecting spatial information for different wavelengths.

According to an embodiment, the system is configured to be arranged for locally monitoring an object, wherein the sensor device is configured to acquire the image representing the object, and wherein the processing unit is configured to determine an attribute of the object.

This implies that the system may be configured to allow determining an attribute of an object in a local monitoring location of the object.

For instance, the system may be configured for locally monitoring a plant, e.g., in an agricultural field. The system may thus be arranged in an agricultural field. For instance, the system may be arranged in a remote location having limited resources. Thus, the system may need to use a limited power in order to provide monitoring of the plants. Thanks to the system using a simple machine-learned model, the system is suited for providing analysis of images comprising multi-spectral information using limited resources.

It should be realized that the system may be used for determining an attribute of an object in various applications. Thus, the system need not necessarily be used for monitoring of plants. For instance, the system may be used for determining an attribute of a person, such as an attribute of a skin of a person, or an interior of an eye (a retina). This may be used for identifying conditions of the skin or the eye.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of representations of an image during pre-processing of an image to be used in machine learning.
Fig. 2 is a flow chart of a method for pre-processing of images.
Fig. 3 is a schematic view illustrating pre-processing of images from different cameras with different spectral resolution.
Fig. 4 is a flow chart of a method for analysis of images.
Fig. 5 shows two-dimensional histogram representations of hyperspectral images illustrating parts of the representations causing determination of an image characteristic.
Fig. 6 is a schematic view of a system.

Detailed description

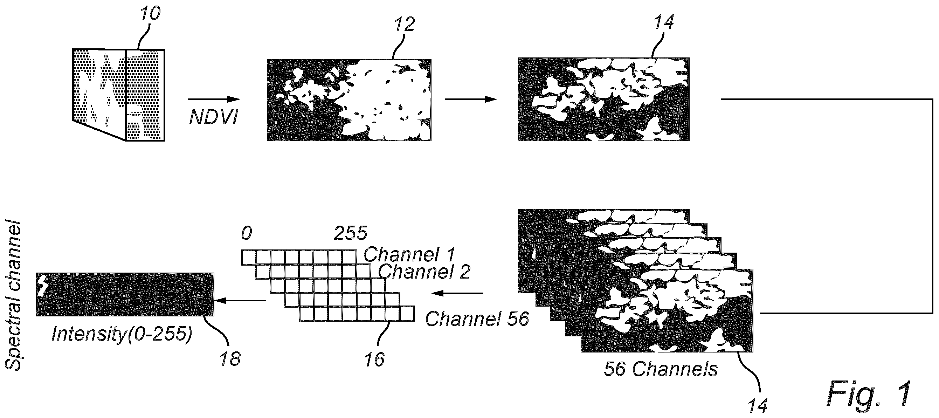

Referring now to Figs 1-2, a method for pre-processing of images for machine learning will be described. The method will be described below in relation to images of plants. However, it should be realized that the method may be used in other applications relating to images of other objects.

The method relates to analysis of images that comprise highly resolved spectral information. The images may be hyperspectral images comprising spectral information in a large number of wavelength channels, spanning a contiguous range of wavelengths. However, it should be realized that the images need not necessarily comprise spectral information in many wavelength channels. Rather, the images may comprise information in at least four different wavelength channels, such that the images comprise more spectral information than a conventional RGB (red, green, blue) image.

Hereinafter, reference is made to hyperspectral images having a large number of wavelength channels. However, it should be realized that the method need not be limited to pre-processing of hyperspectral images but rather images with fewer wavelength channels (that may not be referred to as being hyperspectral images) may be used. Nevertheless, the images comprise at least four different wavelength channels.

The images represent spatial information in an array of pixels. Each pixel may further be represented by a plurality of light intensities in the wavelength channels. Hence, for each pixel, a light intensity is provided for each wavelength channel.

Since the hyperspectral images comprise information in at least four wavelength channels, the hyperspectral images may not be suited for processing in a same manner as conventional RGB images. In particular, existing machine-learning models for processing of RGB images may not be applicable for processing the hyperspectral images. Further, since the hyperspectral images comprise a large amount of information, a machine-learned model for processing spatial and spectral information may become very complex.

In Fig. 1, a hyperspectral image 10 is illustrated. The hyperspectral image 10 is illustrated as a hypercube, comprising spatial information in two dimensions, and comprising spectral information in a third dimension. The hyperspectral image 10 may also be referred to as a three-dimensional tensor.

The method comprises receiving 102 images to be pre-processed. The hyperspectral images 10 may be received from a sensor device that is configured to acquire spatial information and spectral information in at least four different wavelength channels. The sensor device may be a camera but could alternatively be a one-dimensional or two-dimensional array of light-sensitive detectors which may be utilized for acquiring the hyperspectral image, possibly in combination with an array of light sources (lasers) providing light of different wavelengths or a wavelength tunable scanning laser.

The method may comprise determining 104 a region of interest in the array of pixels of the hyperspectral image 10. The region of interest may be determined using a binary mask 12 for selecting a subset of pixels in the array, wherein the subset of pixels represent the region of interest. Thus, the binary mask 12 may initially be defined for determining the region of interest. The method may further comprise applying 106 the binary mask to the hyperspectral image 10 for forming a selection of the subset of pixels. The selection of the subset of pixels may form a segmented image 14.

The binary mask 12 may be generated based on detection of an object in the hyperspectral image 10. This detection may be based on image processing algorithms, e.g., image processing based on a machine-learned model, for detecting the object. Thus, detecting of the object may be automated.

However, it should be realized that the object may be detected by a person that may provide input for identifying a border of the object in the image.

The binary mask 12 may be formed based on detection of the object in one of the wavelength channels in the hyperspectral image 10. Alternatively, the binary mask 12 may be formed based on an average light intensity across all or some of the wavelength channels in the hyperspectral image 10. As yet another alternative, the binary mask 12 may be formed based on detection of the object using all of the wavelength channels.

According to an embodiment related to images of plants, the binary mask 12 may be formed based on using a normalized difference vegetation index (NDVI). Hence, for each pixel, the NDVI may be calculated as:

$$NDVI = \frac{(NIR - Red)}{(NIR + Red)},$$

where *NIR* is a light intensity in a wavelength channel representing near infrared light and *Red* is a light intensity in a wavelength channel representing red light. The binary mask 12 may be formed by identifying pixels for which the NDVI value is larger than a threshold value.

It should be realized that the binary mask 12 may be formed in different ways depending on the object that is being imaged. Also, it should be realized that in some embodiments, the entire hyperspectral image 10 may be used and no mask is applied for selecting subsets of pixels.

When the binary mask 12 is applied, a segmented image 14 may be formed. The binary mask 12 may be applied in spatial dimension of the hyperspectral image 10 so as to select the subset of pixels in the array. For each pixel in the subset of pixels, the hyperspectral image 10 comprises information in the plurality of wavelength channels. Thus, the binary mask 12 may be applied to select spatial information. For the selected subset of pixels, all spectral information may be maintained. This is indicated in Fig. 1 stating that the segmented image 14 comprises 56 wavelength channels.

The method further comprises forming 108 a histogram representation 16 of the hyperspectral image 10 by determining a plurality of histogram values. Each histogram value represents a set of wavelengths and a set of light intensities, and the histogram value corresponds to a number of pixels in the array being assigned to the set of light intensities for the set of wavelengths.

As illustrated in Fig. 1, the histogram representation 16 may be formed by using a single wavelength channel and a single light intensity value for each histogram value. Thus, the set of wavelengths may correspond to a single wavelength channel and the set of light intensities may correspond to a single light intensity value.

In the case illustrated in Fig. 1, the number of wavelength channels is 56, and a range of light intensity values for each wavelength channel is 256, i.e., the light intensity value for each wavelength channel is represented by 8 bits. The histogram representation 16 is formed by determining the number of pixels in the array (or by analysis of the subset of pixels if a segmented image 14 has been formed) that fit into each position in a histogram array. Thus, for each combination of a set of wavelengths and a set of light intensities, the number of pixels that may be assigned to the combination of the set of wavelengths and the set of light intensities is counted. This number of pixels is used to form a histogram value.

Thus, for each wavelength channel (forming a set of wavelengths), a plurality of histogram values is determined. The plurality of histogram values is determined in $n_b$ bins, corresponding to different light intensity values. Thus, each bin represents a set of light intensity values for the wavelength channels. Each pixel intensity value is verified if it is within a range assigned to a particular bin $b_i$ of the given wavelength channel and summation of the number of pixels is performed. It is repeated for all the bins resulting in a histogram for the wavelength channel.

In other words, a plurality of bins may be defined as:

$b = \{1, 2, ..., n_b\}$.

Further, the histogram values $H_d$ for a wavelength channel d may be determined as:

$$H_d = \sum_{r=0}^{h}\sum_{c=0}^{w}\left(b_i \le I_{r,c,d} < b_{i+1}\right),$$

where r is a row number in the array of pixels having *h* rows, c is a column number in the array of pixels having w columns, and $I_{r,c,d}$ is the light intensity of the pixel in row r, column c, and wavelength channel d. It should further be realized that, if a subset of pixels is selected, only the subset of pixels is considered when forming the histogram.

An aggregate of all histograms for all wavelength channels may be formed into a two-dimensional histogram representation 16 of light intensity and wavelength information. This may be formed as a two-dimensional histogram image 18 illustrating occurrence of light intensity values for each wavelength channel in the hyperspectral image 10.

Thanks to forming the two-dimensional histogram representation 16, the information in the hyperspectral image 10 is presented in a format corresponding to conventional RGB images. This implies that the pre-processing of the hyperspectral image 10 to form the two-dimensional histogram representation 16 provides a format of representing the hyperspectral image 10 suitable for machine learning. In particular, the two-dimensional histogram representation 16 or the two-dimensional histogram image 18 may be provided as input to a machine learning method which may be based on existing machine learning methods for image processing.

It should be realized that the accumulated sum of a total pixel count as provided in the histogram values may vary for different image resolutions. Thus, if the total number of pixels differs for different hyperspectral images 10, the histogram values may also become different. However, the received hyperspectral image 10 may initially be re-sized into a standard size. Thus, the method may comprise, when the hyperspectral image 10 is received, resizing the hyperspectral image 10 into a standard size such that all hyperspectral images 10 have a common spatial size.

Furthermore, the accumulated sum of a total pixel count may also vary based on a size of a selected subset of pixels in the array. Thus, if an object is imaged with different magnification or with a different distance to a camera in two different hyperspectral images 10, the size of the selected subset of pixels may differ. Thus, the method may comprise, after selecting the subset of pixel, resizing the subset of pixels into a standard size such that all subsets of hyperspectral images 10 have a common spatial size.

It should be further realized that the number of sets of wavelengths in the histogram representation 16 may not necessarily be equal to the number of wavelength channels. Rather, the number of sets of wavelengths may be defined in a different manner. For instance, depending on the application and wavelength bands in which important information for analyzing the image reside, different sets of wavelengths may be defined. For instance, a smaller number of sets of wavelengths may be defined.

Each set of wavelengths may be defined as a plurality of wavelength bands in the hyperspectral image 10. Also, each set of wavelengths may be defined as a range of wavelengths. Then, the wavelength channels in the hyperspectral image 10 may be compared to the range of wavelengths for defining which of the wavelength channels that belong to the respective sets of wavelengths in the histogram representation 16.

The number of sets of wavelengths may be at least 4. A small number of sets of wavelengths may be used if the spectral information is distinct in providing analysis of objects in the image. However, the number of sets of wavelengths may preferably be larger such that a high spectral resolution is maintained in the histogram representation 16. Thus, the number of sets of wavelengths may be at least 10, at least 20, or at least 50. In an embodiment, the number of sets of wavelengths may be in a range of 3 - 1000, such as 50 - 500.

Also, it should be realized that size of the sets may not need to be equal for each set. Thus, a size of the range of wavelengths may differ for different sets. For instance, a high spectral resolution (and hence, small sets of wavelengths) may be provided in a particularly important part (for analysis of objects in the images) of the electro-magnetic spectrum.

The number of sets of light intensities may also be defined in various ways. The number of sets of light intensities used may be determined in view of needed resolution for a desired analysis of the hyperspectral images. Using a high resolution of light intensity values may allow an accurate analysis of objects in the image.

Thus, the number of sets of light intensities may be at least 16, such as at least 32, such as at least 64, such as at least 128. Even if a large number of sets of light intensities is used, this will only affect a size of the two-dimensional histogram representation 16. This two-dimensional histogram representation 16 is still relatively small in comparison to a size of conventional images, such that the histogram representation 16 does not substantially affect a possibility of analyzing the histogram representation 16 using a machine learning method based on methods for image processing. Also, it should be realized that size of the sets may not need to be equal for each set. Thus, a size of the range of light intensities may differ for different sets.

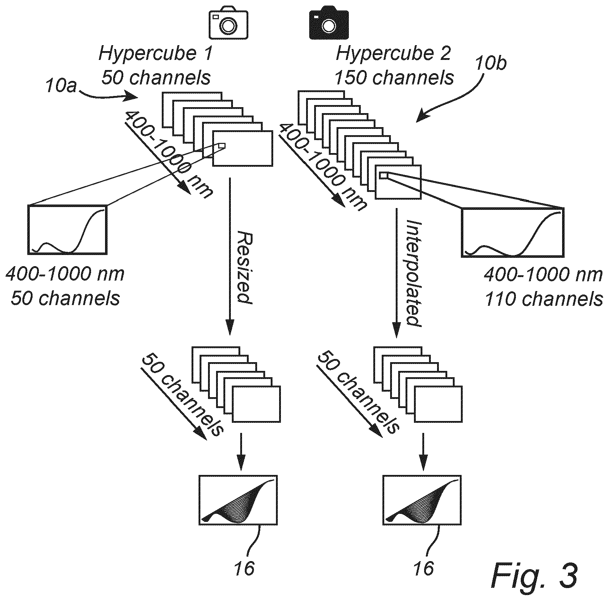

Referring now to Fig. 3, pre-processing of hyperspectral images 10 from different cameras is illustrated. Thanks to the method of forming a histogram representation 16 as discussed above, histogram representations 16 in a common format may be formed even if different cameras are used.

Thus, the forming of the histogram representation 16 may function as a common representation of information in hyperspectral images 10 independent of a type of hyperspectral camera being used. This may be achieved by adjusting a number of sets of wavelengths in the histogram representation 16 and a maximum and minimum value of wavelengths represented in the histogram representation 16.

As shown in Fig. 3, a first camera may form a hyperspectral image 10a having 50 wavelength channels in a range of wavelengths of 400 - 1000 nm. Further, a second camera may form a hyperspectral image 10b having 150 wavelength channels in a range of wavelengths of 400 - 1000 nm. Thus, the spectral resolution is higher in the hyperspectral image 10b acquired by the second camera.

The method for pre-processing images may be configured to determine a histogram representation 16 with pre-defined settings. Thus, each of the hyperspectral images 10a, 10b may be pre-processed in order to form a respective histogram representation 16 with identical sets of wavelengths and sets of light intensities. This may ensure that the histogram representations 16 are provided in a common format allowing the histogram representations 16 to be further processed in a common manner, using a machine-learned model.

However, it should be realized that in some embodiments, the sets of wavelengths and sets of light intensities are not the same for all histogram representations 16. For instance, a machine-learned model may be trained to identify a particular pattern or shape in the two-dimensional histogram representation. Such pattern or shape may be present even if the histogram representations 16 do not have identical sets of wavelengths and sets of light intensities, even though the pattern or shape may have a different size. Nevertheless, if the histogram representations have identical sets of wavelengths and sets of light intensities, a more robust machine-learned model may be provided.

In order to provide a common format of the histogram representation 16 for both hyperspectral images 10a, 10b, the hyperspectral images 10a, 10b may be processed slightly differently. The hyperspectral images 10a, 10b may initially be processed in order to set the hyperspectral images 10a, 10b into a common format. For instance, the hyperspectral images 10a, 10b may, before determining 104 a region of interest or before forming 108 of the histogram representation, be adjusted to form representations with equal number of wavelength channels. Also, if light intensities are represented with different resolution, the hyperspectral images 10a, 10b may be adjusted to form representations with equal light intensity range. This may be performed using image processing steps for converting the hyperspectral images 10a, 10b to desired format.

However, according to an alternative, in the forming 108 of the histogram representation 16, information from different wavelength channels in the hyperspectral images 10a, 10b may be used for the respective histogram representations 16. Thus, the hyperspectral images 10 may not need to be adjusted but rather the histogram representations 16 in common format may be achieved by taking different wavelength channels from the hyperspectral images 16 into account for each histogram value to be determined.

As shown in Fig. 3, the hyperspectral image 10b may be adjusted so as to form a representation with 50 wavelength channels corresponding to the number of wavelength channels of the hyperspectral image 10a. For instance, interpolation may be used for converting the hyperspectral image 10b having 150 wavelength channels to a corresponding hyperspectral image having 50 wavelength channels.

The hyperspectral image 10 may be converted using extrapolation or interpolation for forming a representation with a desired number of wavelength channels. This may facilitate forming of the histogram representation 16 as the wavelength channels may be directly related to a particular set of wavelengths in the histogram representation 16.

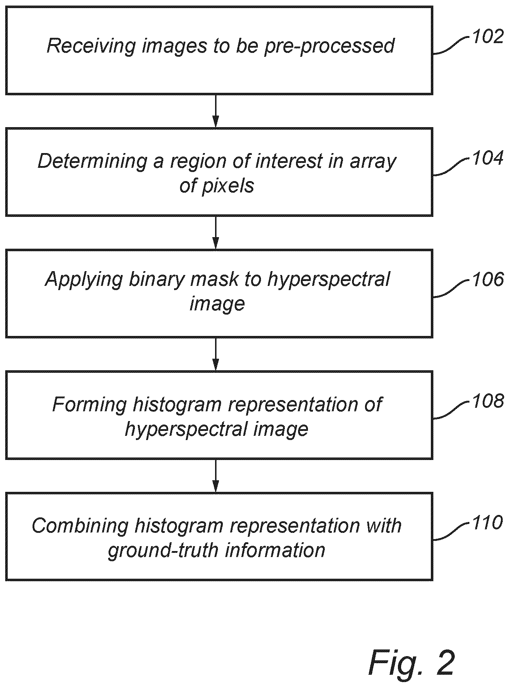

Referring now to Fig. 2 again, the histogram representation 16 may be used as input to machine learning. As mentioned above, the histogram representation 16 may be adapted to allow a machine learning method based on analysis of conventional images (with no more than 3 wavelength ranges) to be used.

The histogram representation 16 in form of an array of histogram values or in form of a two-dimensional histogram image 18 or other type of image may be used as input to machine learning. The method for pre-processing images may form histogram representations 16 of all hyperspectral images 10 that are to be used for machine learning.

The machine learning may involve supervised learning, wherein a machine-learned model is formed based on training data and ground-truth information associated with the training data. This allows forming of a machine-learned model based on ground-truth information on a desired outcome of the machine-learned model. The machine learning may involve unsupervised learning, wherein a machine-learned model is formed based on finding patterns in training data. The machine learning may involve semi-supervised learning, wherein only part of training data is associated with ground-truth information.

According to an embodiment, supervised learning is used. The method may then comprise combining 110 the histogram representation 16 of each hyperspectral image 10 with ground-truth information of a characteristic in the hyperspectral image 10. In some embodiments, the ground-truth information may comprise information of a plurality of characteristics in the hyperspectral image 10. This may be used for allowing training of a machine-learned model to classify images based on more than one characteristic.

The ground-truth information may comprise a single representation of the characteristic in the hyperspectral image 10. This implies that an overall characteristic is provided which need not be linked to any particular spatial or spectral portion of the information in the hyperspectral image 10. This implies that annotation of hyperspectral images 10 is greatly simplified and user input for providing the ground-truth information need not indicate particular portions of the image that represents the characteristic.

For instance, each hyperspectral image 10 may represent a plant and the ground-truth information represents a condition of the plant. Thus, a single value of a particular condition may be provided in the ground-truth information. The condition of the plant may be represented as healthy/unhealthy but may alternatively be represented as a plurality of characteristics defining whether the plant is affected by a particular type of damage or disease. As an example, the hyperspectral images 10 may represent potato plants and a first characteristic of the ground-truth information may represent whether the potato plant is affected by virus X and a second characteristic of the ground-truth information may represent whether the potato plant is affected by virus Y.

The two-dimensional histogram image 18 may be suitable as input to a machine learning method. However, the histogram representation 16 in the form of an array of histogram values may also or alternatively be used as input to the machine learning method.

If ground-truth information is provided, the combination of the histogram representation with ground-truth information may be provided as input to the machine learning method.

The input to the machine learning method may be used to train typical neural networks for forming a machine-learned model. For instance, the input may be used for training a Convolutional Neural Network (CNN) that is pre-trained using RGB images. For instance, a CNN-based model may be used. Examples are a residual neural network ResNet described in He et al: "Deep residual learning for image recognition", Proceedings of the IEEE Conference on Computer Vision and Pattern Recognition, pages 770-778, 2016, ConvNeXt described in Liu et al: "A ConvNet for the 2020s", Proceedings of the IEEE/CVF Conference on Computer Vision and Pattern Recognition, pages 11976-11986, 2022, or EfficientNet described in Tan et al: "EfficientNet: Rethinking model scaling for convolutional neural networks", Proceedings of the 36th International Conference on Machine Learning, pages 6105-6114, 2019. Alternatively, a transformer-based model, such as a Vision Transformer (ViT) described in Dosovitskiy et al: "An image is worth 16x16 words: Transformers for image recognition at scale", International Conference on Learning Representation, pages 45-67, 2021, may be used.

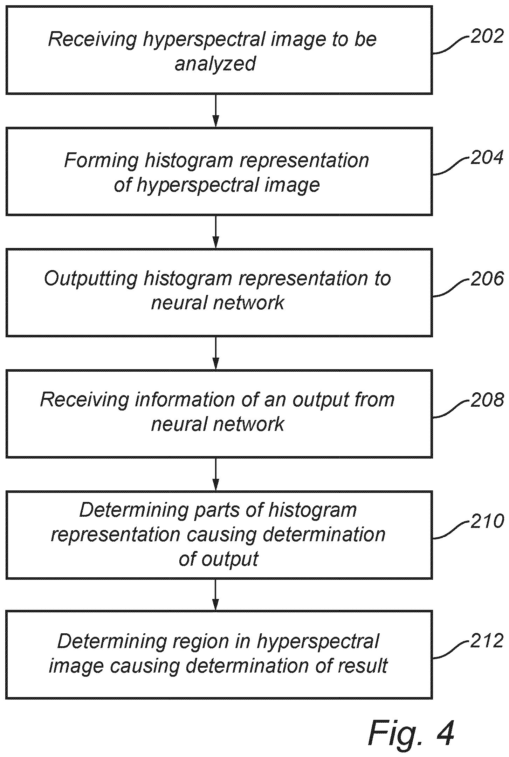

Referring now to Fig. 4, a method for analysis of an image will be described. The method relates to a deployment of the machine-learned model after the machine-learned model has been trained based on the input described above.

The method relates to analysis of images of similar type that are used for training of the machine-learned model. Thus, the method relates to analysis of images that comprise highly resolved spectral information. The images may be hyperspectral images comprising spectral information in a large number of wavelength channels, spanning a contiguous range of wavelengths. However, it should be realized that the images need not necessarily comprise spectral information in many wavelength channels. Rather, the images may comprise information in at least four different wavelength channels, such that the images comprise more spectral information than a conventional RGB image.

The method comprises receiving 202 a hyperspectral image to be analyzed. The hyperspectral image may be received from a sensor device that is configured to acquire spatial information and spectral information in at least four different wavelength channels. The sensor device may be a camera but could alternatively be a one-dimensional or two-dimensional array of light-sensitive detectors which may be utilized for acquiring the hyperspectral image.

It should be realized that the method may be performed in a device that includes the sensor device. Thus, the receiving of the hyperspectral image may correspond to a process for analyzing the image receiving the image from the sensor device internally within the device in which the analysis is performed.

The method further comprises forming 204 a histogram representation of the hyperspectral image by determining a plurality of histogram values. The method may thus correspond to performing the same processing of the hyperspectral image as described above for forming histogram representations for training of the machine-learned model. Hence, the hyperspectral image is brought into a representation format which has been used for training of the machine-learned model and which may thus be suitable as input to the machine-learned model.

As described above, each histogram value represents a set of wavelengths and a set of light intensities, and the histogram value corresponds to a number of pixels in the array being assigned to the set of light intensities for the set of wavelengths. Corresponding sets of wavelengths and sets of light intensities as used in the histogram representation formed for training of the machine-learned model may be used in forming of the histogram representation for analysis of the image.

The method may further utilize the machine-learned model that has been trained for analysis of hyperspectral images. Thus, the method may comprise outputting 206 the histogram representation to a neural network. The neural network may for instance represent a relation between histogram representations of images and a characteristic in the image. Alternatively, the neural network may be able to classify histogram representations into different categories, which may not necessarily be based on a particular characteristic in the image. This may be used, e.g., if an unsupervised training of the machine-learned model is used.

The method may further comprise receiving 208 information of an output from the neural network. For instance, the neural network may output an image characteristic of the image based on the machine-learned model.

From a perspective of the neural network, the histogram representation is provided as input to the neural network, and the image characteristic may be provided as output from the neural network.

Although the histogram representation facilitates processing of images using a machine-learned model, it may be difficult to visualize an effect of the spectral features spatially on the images. Such visualization or link of the spectral features to a particular location in the image may be beneficial to provide an insight on a part of the image. For instance, the particular location may indicate a part of a plant that is damaged or affected by a disease.

To counteract this issue, the spatial coordinates of each pixel which is part of a specific histogram value can be used for mapping the histogram value back to a location in the hyperspectral image. Thus, the spatial coordinates of pixels may be stored in relation to locations in the histogram representation. Such spatial information may thus provide a relation between the spatial positions of the pixels and parts of the histogram representation.

The method may include determining 210 parts of the histogram representation causing a determination of the output, such as the image characteristic, by the machine-learned model. A separate explainable neural network may be used for determining which parts of the histogram representation that lead to the result being output. For instance, a gradient class activation map (Grad-CAM described in Selvaraju et al: "Grad-CAM: Visual Explanations from Deep Networks via Gradient-Based Localization", Proceedings of the IEEE International Conference on Computer Vision, pages 618-626, 2017) may be used for determining locations in the histogram representation that causes output of the result from the machine-learned model.

The explainable neural network may be configurd to generate a weighted mask or a binary mask. The mask may then be applied to the histogram representation in order to determine the parts of the histogram representation that lead to the result being output by the machine-learned model.

Thus, spectral features in the histogram representation may be highlighted. For instance, the Grad-CAM may provide an indication of particular wavelengths having a high/low light intensity that causes the output of the result from the machine-learned model, such as causing an indication of a healthy or an unhealthy plant.

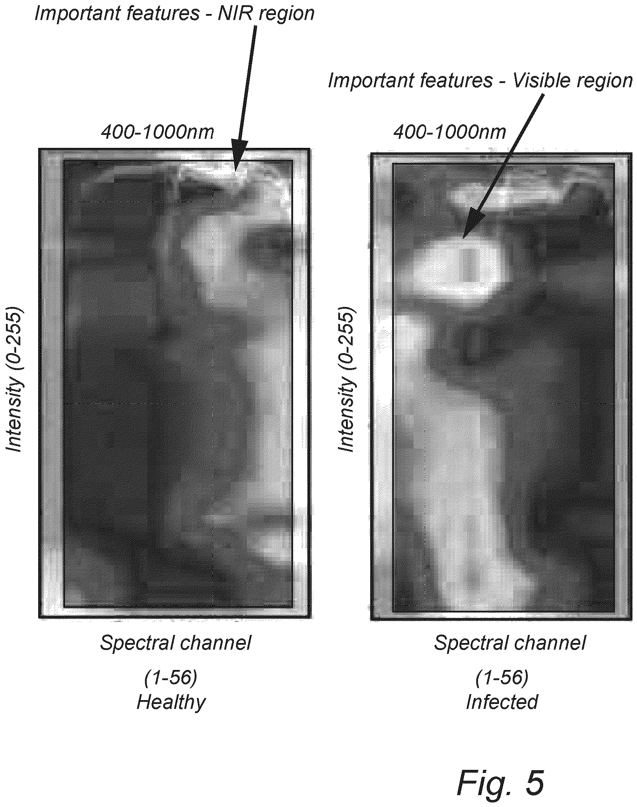

As shown in Fig. 5, the determining of parts of the histogram representation may highlight particular parts of the histogram representation that are representative of the condition of the plant.

Using the stored spatial information, the method may further comprise determining 212 a region in the hyperspectral image that causes the determination of the result, such as the image characteristic, of the machine-learned model. The region in the hyperspectral image may be determined by using the determined parts of the histogram representation being important for the result from the machine-learned model and further mapping the determined parts of the histogram representation to the spatial positions of pixels in the hyperspectral image using the stored relation between spatial positions of pixels and parts of the histogram representation.

The determination of the spatial postions of pixels of importance in the hyperspectral image may be used for automated pixel-wise annotations of the hyperspectral image.

The methods described above are computer-implemented methods. The methods may be performed by a processing unit executing a software configured to cause the processing unit to perform the methods. Thus, a computer program product may be provided, comprising computer-readable instructions which when executed by the processing unit cause the processing unit to perform any of the methods described above.

It should be realized that training of a machine-learned model may be performed anywhere. Thus, the processing unit configured to receive images to be pre-processed may be arranged anywhere. The processing unit may be arranged in a camera or other sensor device which is used for acquiring the hyperspectral images. However, since the training of the machine-learned model may require relatively large computer resources, the training of the machine-learned model may typically not be performed in the camera.

The pre-processing of the images may be performed in the camera, which may then forward the histogram representation to a separate processing unit which may perform the training of the machine-learned model. Alternatively, a processing unit external to the camera or sensor device may receive hyperspectral images and perform pre-processing of images and training of the machine-learned model.

It should further be realized that the methods may be performed in a distributed manner such that the processing unit may comprise a plurality of different entities that may be arranged in different locations for performing different parts of the processing. Thus, the processing unit for pre-processing of images may be provided anywhere, such as "in the cloud". The processing unit may communicate with camera(s) or other sensor device(s) through a computer network, such as the Internet, enabling the processing unit to be arranged anywhere in relation to the camera(s) or other sensor device(s) for receiving the hyperspectral images for training of the machine-learned model.

The method for analysis of images may be suitable for being performed in a processing unit having limited resources. The machine-learned model may be relatively small requiring limited computer resources for allowing the machine-learned model to be deployed in a camera or other sensor device. Thus, the analysis of images may be performed in a processing unit of the camera or other sensor device used for acquiring the image. The camera may for instance be arranged in a remote location, such as in an agricultural field. Thanks to the machine-learned model being deployed in the camera, the acquired hyperspectral images may be locally processed and a result may be communicated to an external unit. This implies that communication of data from the camera may be limited.

The camera can also act as an edge device and may be configured to process the histogram representations using the machine-learned model. The camera may be further configured to make decisions based on the analysis of images in near-realtime.

However, it should be realized that the analysis of images need not necessarily be performed in the camera or need not be performed in entirety by the camera. For instance, the processing unit in the camera may be configured to pre-process the acquired image to form a histogram representation. The histogram representation may then be output to an external processing unit which may process the histogram representation using the machine-learned model for determining an image characteristic. The histogram representation for each hyperspectral image may be only few kilobytes in size irrespective of the spectral and spatial resolution of the hyperspectral image. Hence, this facilitates wireless transmission of data from a camera, if the method for converting the hyperspectral image to the histogram representation is incorporated on the camera.

According to an alternative, the camera, e.g., being an edge device, may process the histogram representation for finding relevant regions in a large image. These regions may then be sent to an external processing unit, such as in the cloud, for further processing.

When the method for analysis of images is implemented in a remotely located camera, such as a camera in an agricultural field, a determined image characteristic or a histogram representation may also be patched with real time kinematics global positioning system (RTK-GPS) information data. The camera may be configured to be moved such as being arranged on a drone for gathering information from a plurality of locations, such as a plurality of locations in the agricultural field. Alternatively, a plurality of cameras may be arranged in different locations for gathering information from the different locations, such as in the agricultural field. The predictions of image characteristics, such as conditions of a plant, and location information may then be used to build a decision map. The data may also be logged into a processing unit, such as a processing unit arranged in the "cloud", through wireless data transmission.

However, as yet another alternative, the camera may be configured to output the acquired images to an external processing unit, which may perform the analysis of the image. Such external processing unit for analysis of images may be provided anywhere, such as "in the cloud".

It should further be realized that determination of spatial positions of pixels that cause a determination of the image characteristic may require storing a relatively large amount of data for storing the relation between spatial positions of pixels and parts of the histogram representation. The spatial information of images may be stored locally in the camera and may be processed off-line for particular histogram representations that provide image characteristics of interest. Thus, insights of some predictions by the machine-learned model may be obtained.

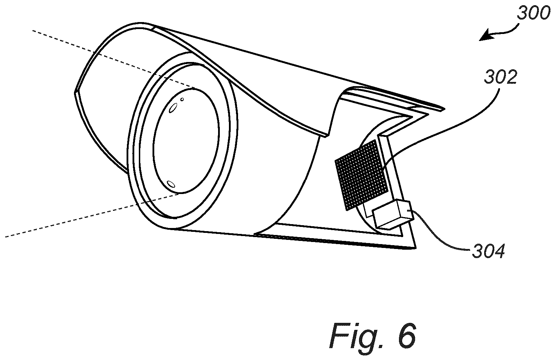

Referring now to Fig. 6, a system 300 for image analysis will be briefly described. The system 300 comprises a sensor device 302 configured to acquire the hyperspectral image. Thus, the sensor device 302 may be configured to acquire spatial information in an array of pixels and further acquire spectral information in at least four different wavelength channels for each of the pixels in the array. The sensor device 302 may be implemented by a hyperspectral camera.

The system 300 further comprises a processing unit 304 connected to the sensor device 302. The processing unit 304 is configured to perform the method for analysis of images according to any of the embodiments described above.

The processing unit 304 may be arranged within a common housing with the sensor device 302 for receiving the images directly from the sensor device 302. However, as described above, the processing unit 304 may alternatively be arranged in a different location and may be configured to be connected to the sensor device 302 using wired or wireless communication.

The system 300 may be configured to be arranged for locally analyzing an object. The system 300 may for instance be arranged in an agricultural field but may alternatively be used in other applications, such as in analysis of skin or an eye of a person. The sensor device 302 may be configured to acquire the image representing the object and the processing unit 304 may be configured to determine an attribute of the object. This may be achieved using the machine-learned model. For instance, the processing unit 304 may be configured to determine a condition of a plant.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for pre-processing of images (10) for machine learning, said method comprising:

   receiving (102) images (10) to be pre-processed, wherein each image (10) represents information in an array of pixels providing spatial information of the image (10), wherein each pixel is represented by a plurality of light intensities in at least four different wavelength channels providing multi-spectral information; and forming (108) a histogram representation (16, 18) of each image (10) by determining a plurality of histogram values, wherein each histogram value represents a set of wavelengths and a set of light intensities and the histogram value corresponds to a number of pixels in the array being assigned to the set of light intensities for the set of wavelengths.

2. The method according to claim 1, further comprising combining (110) the histogram representation (16, 18) of each image (10) with ground-truth information of a characteristic in the image (10).

3. The method according to claim 1 or 2, wherein a number of sets of wavelengths in the histogram representation (16, 18) is at least 4, such as at least 10, such as at least 20, such as at least 50.

4. The method according to any one of the preceding claims, wherein a number of sets of light intensities in the histogram representation (16, 18) is at least 16, such as at least 32, such as at least 64, such as at least 128.

5. The method according to any one of the preceding claims, wherein a number of sets of wavelengths and a number of sets of light intensities is identical for each histogram representation (16, 18).

6. The method according to claim 5, wherein the forming of a histogram representation (16, 18) comprises using extrapolation and/or interpolation for determining the plurality of histogram values for each image (10) with identical numbers of sets of wavelengths and numbers of sets of light intensities.

7. The method according to any one of the preceding claims, wherein the forming of the histogram representation (16, 18) comprises forming a two-dimensional representation of intensity and wavelength information.

8. The method according to any one of the preceding claims, further comprising using (106) a binary mask (12) for selecting a subset of pixels in the array representing a region of interest in the array, wherein the histogram values are based on analysis of the subset of pixels for determining the number of pixels in the array being assigned to the set of light intensities for the set of wavelengths.

9. The method according to any one of the preceding claims, wherein the ground-truth information comprises a single representation of the characteristic for an entire image (10).

10. The method according to any one of the preceding claims, wherein each image (10) represents a plant and the ground-truth information represents a condition of the plant.

11. A method for analysis of an image, said method comprising:

    receiving (202) the image, wherein the image represents information in an array of pixels providing spatial information of the image, wherein each pixel is represented by a plurality of light intensities in at least four different wavelength channels providing multi-spectral information; forming (204) a histogram representation of the image by determining a plurality of histogram values, wherein each histogram value represents a set of wavelengths and a set of light intensities and the histogram value corresponds to a number of pixels in the array being assigned to the set of light intensities for the set of wavelengths; outputting (206) the histogram representation to a neural network representing a relation between histogram representations of images and a characteristic in the images; and receiving (208) information of an image characteristic of the image from the neural network.

12. The method according to claim 11, further comprising:

    storing spatial information providing a relation between spatial positions of pixels and parts of the histogram representation; determining (210) parts of the histogram representation causing a determination of the image characteristic by the neural network; and determining (212), based on the spatial information, a region in the image causing the determination of the image characteristic.

13. A computer program product, comprising computer-readable instructions which when executed by a processing unit cause the processing unit to perform the method according to any one of the preceding claims.

**14.** A system (300) for image analysis, said system (300) comprising:

a sensor device (302) configured to acquire spatial information and spectral information in at least four different wavelength channels for forming an image; and
a processing unit (304) connected to the sensor device (302) and configured to perform the method according to claim 11 or 12, wherein the received image is the image acquired by the sensor device (302).

**15.** The system according to claim 14, wherein the system (300) is configured to be arranged for locally monitoring an object, wherein the sensor device (302) is configured to acquire the image representing the object, and wherein the processing unit (304) is configured to determine an attribute of the object.

Fig. 1

EP 4 760 649 A1

Receiving images to be pre-processed 102

Determining a region of interest in array of pixels 104

Applying binary mask to hyperspectral image 106

Forming histogram representation of hyperspectral image 108

Combining histogram representation with ground-truth information 110

*Fig. 2*

Fig. 3

Receiving hyperspectral image to be analyzed — 202

Forming histogram representation of hyperspectral image — 204

Outputting histogram representation to neural network — 206

Receiving information of an output from neural network — 208

Determining parts of histogram representation causing determination of output — 210

Determining region in hyperspectral image causing determination of result — 212

*Fig. 4*

*Fig. 5*

*300*

*302*

*304*

*Fig. 6*

Europäisches
Patentamt

European
Patent Office

Office européen
des brevets

## EUROPEAN SEARCH REPORT

**Application Number**

EP 24 22 0088

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Histogram Hyperspectral: "Plot Histograms for Hyperspectral Images", PlantCV, 20 March 2023 (2023-03-20), XP093269866, Retrieved from the Internet: URL:https://web.archive.org/web/2023032009 5648/https://plantcv.readthedocs.io/en/lat est/visualize_hyper_histogram/ [retrieved on 2025-04-14] * First paragraphs; hyperspectral image, mask and histograms of signal intensity * ----- | 1,3,4,7, 8,13 | INV. G06V10/50 G06V10/774 G06V10/778 G06V10/58 |
| X | UZKENT BURAK ET AL: "Aerial Vehicle Tracking by Adaptive Fusion of Hyperspectral Likelihood Maps", 2017 IEEE CONFERENCE ON COMPUTER VISION AND PATTERN RECOGNITION WORKSHOPS (CVPRW), IEEE, 21 July 2017 (2017-07-21), pages 233-242, XP033145778, DOI: 10.1109/CVPRW.2017.35 [retrieved on 2017-08-22] * Sections 3 and 4; figures 4, 5, 7 * ----- | 1-15 | |
| | | | TECHNICAL FIELDS SEARCHED (IPC) |
| | | | G06V |
| X | DATTA ALOKE ET AL: "Hyperspectral Image Segmentation using Multi-dimensional Histogram over Principal Component Images", 2018 INTERNATIONAL CONFERENCE ON ADVANCES IN COMPUTING, COMMUNICATION CONTROL AND NETWORKING (ICACCCN), IEEE, 12 October 2018 (2018-10-12), pages 857-862, XP033570945, DOI: 10.1109/ICACCCN.2018.8748388 [retrieved on 2019-06-27] * Section II-B; figures 3, 5 * ----- -/-- | 1,4,5, 7-10,13 | |

The present search report has been drawn up for all claims

| Place of search | Date of completion of the search | Examiner |
|---|---|---|
| The Hague | 15 April 2025 | Craciun, Paula |

EPO FORM 1503 03.82 (P04C01)

page 1 of 2

Europäisches
Patentamt

European
Patent Office

Office européen
des brevets

# EUROPEAN SEARCH REPORT

Application Number

EP 24 22 0088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANG XUDONG ET AL: "Two-Dimensional Spectral Representation", IEEE TRANSACTIONS ON GEOSCIENCE AND REMOTE SENSING, 18 December 2023 (2023-12-18), pages 1-9, XP093269913, USA ISSN: 0196-2892, DOI: 10.1109/TGRS.2023.3343909 Retrieved from the Internet: URL:https://ieeexplore.ieee.org/document/10363213 [retrieved on 2025-04-14] * Section I, last par.; Section II-B; figure 4 * | 1-15 | |

-----

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 15 April 2025 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE et al.** Deep residual learning for image recognition. *Proceedings of the IEEE Conference on Computer Vision and Pattern Recognition*, 2016, 770-778
- **LIU et al.** A ConvNet for the 2020s. *Proceedings of the IEEE/CVF Conference on Computer Vision and Pattern Recognition*, 2022, 11976-11986
- **TAN et al.** EfficientNet: Rethinking model scaling for convolutional neural networks. *Proceedings of the 36th International Conference on Machine Learning*, 2019, 6105-6114

- **DOSOVITSKIY et al.** An image is worth 16x16 words: Transformers for image recognition at scale. *International Conference on Learning Representation*, 2021, 45-67
- **SELVARAJU et al.** Grad-CAM: Visual Explanations from Deep Networks via Gradient-Based Localization. *Proceedings of the IEEE International Conference on Computer Vision*, 2017, 618-626